Europäisches Patentamt

European Patent Office

Office européen des brevets

(19)

(11) Publication number: **0 066 040**

A1

## (12) EUROPEAN PATENT APPLICATION

(21) Application number: 82101238.2

(22) Date of filing: 18.02.82

(51) Int. Cl.³: **F 16 C 15/00**
**F 16 F 15/30**

(30) Priority: 29.05.81 US 268228

(43) Date of publication of application:
08.12.82 Bulletin 82/49

(84) Designated Contracting States:
CH DE FR GB IT LI

(71) Applicant: Rockwell International Corporation
2230 East Imperial Highway
El Segundo, California 90245(US)

(72) Inventor: Davis, Donald Eugene
350 Siesta Avenue
Thousand Oaks California 91360(US)

(72) Inventor: Ingham, Kenneth Thomas
21531 Dumetz Road
Woodland Hills California 91364(US)

(72) Inventor: Nagy, Kenneth Joseph
3516 Woodcliff Road
Sherman Oaks California 91403(US)

(74) Representative: Wächtershäuser, Günter, Dr.
Gewürzmühlstrasse 5
D-8000 München 22(DE)

(54) Flywheel shell construction.

(57) A method of assembling a flywheel 2 comprising the steps of mounting a removable mandrel 6 about the hub 4 of said flywheel 2, winding a first plurality of resin-impregnated fibers 8 about said mandrel 6 circumferentially with respect to said hub 4, winding a second plurality of resin-impregnated fibers 10 tangentially about said hub 4 extending to enclose said mandrel 6 and said first plurality of fibers 4, and removing said mandrel 6. The structure of the resulting flywheel 2 is also claimed.

FIG. 1

EP 0 066 040 A1

EA-3845
79R58

# FLYWHEEL SHELL CONSTRUCTION

Donald E. Davis
Kenneth T. Ingham
Kenneth J. Nagy

The Government has rights in this invention pursuant to Contract No. DE-AC04-76DP-00789 awarded by the U. S. Department of Energy.

## Background of the Invention

### 1. Field of the Invention

This invention relates to flywheels and is particularly directed to ultralight shell construction for flywheels and methods of forming the same.

### 2. Description of the Prior Art

Traditionally, flywheels have been massive devices which have relied upon their mass to store energy. For example, the flywheels of automobile engines typically weigh about 50 to 100 pounds and rotate at several hundred rpm. More recently, it has been recognized that the equation which defines the amount of energy stored by a flywheel is equal to the mass times the square of the velocity. In accordance with this, attempts have been made to increase the energy stored in flywheels by increasing the speed of rotation of the flywheel. Unfortunately, this also increases the centrifugal forces which tend to cause the flywheel to fly apart with explosive results. Consequently, current flywheel research has been directed toward designing low-weight, high-velocity flywheels. Thus, modern flywheels are designed for rotational speeds of 10,000-20,000 rpm. However, no flywheel structures have been proposed heretofore which are capable of withstanding prolonged rotation at these speeds. Consequently, the search for improved flywheel structures has continued.

Brief Summary and Objects of the Invention

The disadvantages of the prior art are overcome with the present invention and a flywheel construction is proposed which is extremely light in weight and economical to produce, yet is extremely strong and resistant to centrifugal focus at high rates of revolution. In addition, a method of producing the flywheel construction is provided.

The advantages of the present invention are preferably attained by providing a flywheel construction having a small diameter hub and a removable mandrel extending radially outward from the hub. A first plurality of high-strength fibers, impregnated with a suitable binder, are wrapped circumferentially about the mandrel and a second plurality of binder-impregnated, high-strength fibers are wrapped about the mandrel and the first plurality of fibers in directions tangential to the hub to form an outer shell for the flywheel. Thereafter, the mandrel is removed to form a hollow, light-weight flywheel.

Accordingly, it is an object of the present invention to provide an improved flywheel.

Another object of the present invention is to provide a light-weight flywheel which is strong enough to withstand prolonged rotation at high speeds, together with a method of forming the flywheel.

A specific object of the present invention is to provide a light-weight flywheel comprising a hub, a first plurality of high-strength fibers impregnated with a binder and wrapped circumferentially about the hub but spaced radially from said hub, and a second plurality of binder impregnated fibers wrapped tangentially about said hub and extending about the first plurality of fibers to form an outer shell for said flywheel, together with a method for forming the flywheel by providing a removable mandrel about the hub, wrapping the first and second plurality of fibers about the mandrel, and removing the mandrel to provide a hollow, light-weight flywheel.

These and other objects and features of the present invention will be apparent from the following detailed description, taken with reference to the figures of the accompanying drawing.

## Brief Description of the Drawings

Fig. 1 is a vertical section through a flywheel embodying the present invention;

Fig. 2 is a view, similar to Fig. 1, showing the mandrel in place during formation of the flywheel; and

Fig. 3 is a plan view of the flywheel of Fig. 1 with a portion of the shell broken away for clarity.

## Detailed Description of the Preferred Embodiment

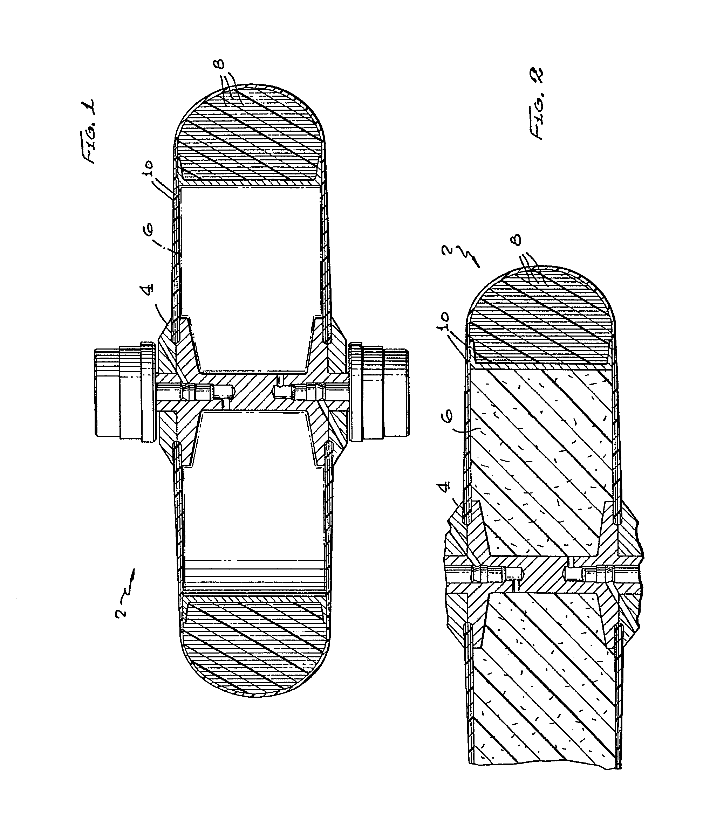

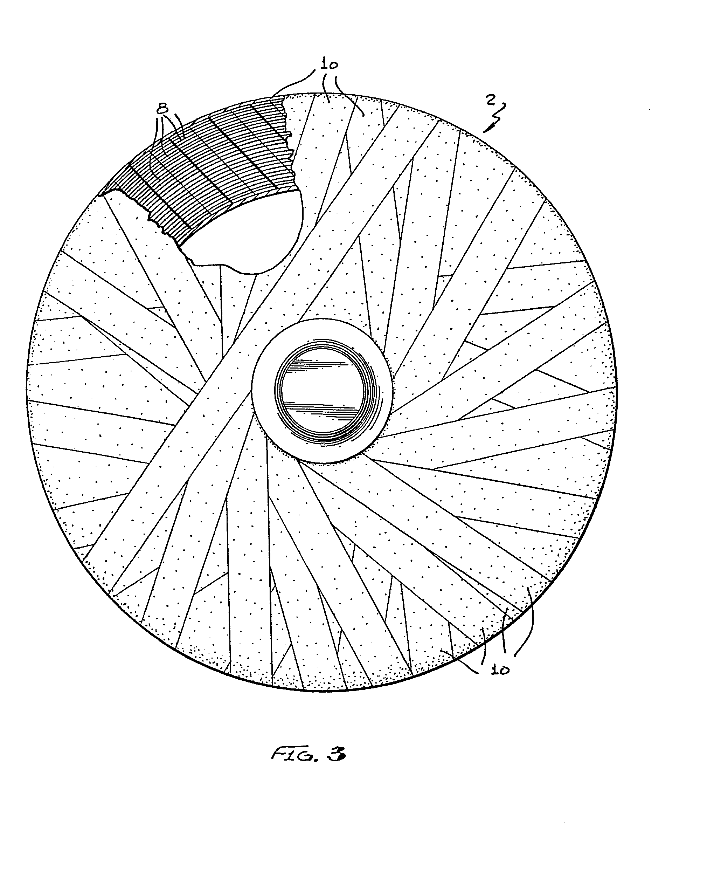

In that form of the present invention chosen for purposes of illustration, Fig. 1 shows a flywheel, indicated generally at 2, having a hub 4 of relatively small radial dimension. A removable mandrel 6 is mounted on the hub 4 and extends radially outward therefrom. A first plurality of high-strength fibers impregnated with a suitable binder material, such as a resin, are wound circumferentially about the mandrel 6, as seen at 8 in Fig. 1, and a second plurality of binder-impregnated, high-strength fibers are wound about the periphery of the mandrel 6 and first plurality of fibers 8 in directions tangential to the hub 4, as seen at 10.

After the binder material of the second plurality of fibers 10 has set, the mandrel 6 is removed to provide a hollow, light-weight flywheel construction of extremely high strength. The mandrel 6 may be inflatable for mounting on the hub 4 to enable winding of the fibers 8 and 10 thereabout and may subsequently be deflated for removal. Alternatively, the mandrel 6 may be formed of rigid material which can be removed by melting, dissolution or disassembly after the fibers 8 and 10 have been wound thereon.

0066040

Obviously, numerous variations and modifications can be made without departing from the present invention. Accordingly, it should be clearly understood that the form of the present invention described above and shown in the accompanying drawing is illustrative only and is not intended to limit the scope of the invention.

What is claimed and desired to be secured by Letters Patent of the United States is:

1. A flywheel comprising:

a hub having a relatively small diameter;

a first plurality of resin-impregnated fibers extending circumferentially about said hub with the innermost portion of said first plurality of fibers spaced a substantial distance radially from said hub; and

a second plurality of resin-impregnated fibers extending tangentially with respect to said hub and enclosing said first plurality of fibers and the space between said first plurality of fibers and said hub to form a shell for said flywheel.

2. The flywheel of Claim 1 further comprising a mandrel filling the space between said hub and said first plurality of fibers during assembly of said flywheel and removable upon completion of such assembly.

3. The method of assembling a flywheel, said method comprising the steps of:

mounting a removable mandrel about the hub of said flywheel;

winding a first plurality of resin-impregnated fibers about said mandrel circumferentially with respect to said hub;

winding a second plurality of resin-impregnated fibers tangentially about said hub to enclose said mandrel and said first plurality of fibers; and

removing said mandrel.

4. The flywheel of Claim 2 wherein said flywheel is inflatable for winding said fibers and deflatable for removal.

5. The flywheel of Claim 2 wherein said mandrel is formed of rigid material which can be melted for removal.

0066040

6. The flywheel of Claim 2 wherein said mandrel is formed of rigid material which can be dissolved for removal.

7. The flywheel of Claim 2 wherein said mandrel is formed to provide a rigid structure during assembly of said flywheel and which can be disassembled for removal.

8. The method of Claim 3 wherein said removing step comprises deflating said mandrel.

9. The method of Claim 3 wherein said removing step comprises dissolving said mandrel.

10. The method of Claim 3 wherein said removing step comprises melting said mandrel.

FIG.1

FIG.2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-4 123 949 (C.E. KNIGHT et al.) <br> *The whole document* | 1,2-10 | F 16 C 15/00 <br> F 16 F 15/30 |
| Y | FR-A-2 242 607 (SOCIETE EUROPEENNE DE PROPULSION) <br> *Page 4, lines 28-34* | 2-10 | |
| X | DE-A-2 622 295 (CANDERS et al.) <br> *The whole document* | 1 | |
| P | DE-A-2 949 125 (BÜHL) <br> *the whole document* | 1 | |
| A | US-A-4 183 259 J.L. GIOVACHINI et al.) | 3 | |

TECHNICAL FIELDS
SEARCHED (Int. Cl. ³)

F 16 C
F 16 F

The present search report has been drawn up for all claims

| Place of search | Date of completion of the search | Examiner |
|---|---|---|
| THE HAGUE | 05-08-1982 | CINQUANTINI B. |